# EUROPEAN PATENT APPLICATION

(11) **EP 4 803 706 A1**
(43) Date of publication of application: **09.09.2026**
(21) Application number: 24885248.5
(22) Date of filing: 15.08.2024
(51) Int. Cl.: E02F 9/00, H01M 8/04

(54) **EXCAVATOR**

(30) Priority: 31.10.2023 JP 2023187062
(71) Applicant: KAWASAKI JUKOGYO KABUSHIKI KAISHA, Kobe-shi, Hyogo 650-8670 (JP)
(72) Inventor: MIYOSHI, Ryo, Hyogo 6508670 (JP); FUJIE, Masatsugu, Hyogo 6508670 (JP); TANAKA, Shinichiro, Hyogo 6508670 (JP)
(74) Representative: EIP
(86) International application number: PCT/JP2024/029126
(87) International publication number: WO 2025/094471

(57) **Abstract**

This excavator includes: a slewing body rotatably mounted on a traveling device and including a cabin in which a driver seat is disposed; a hydrogen tank disposed within the slewing body; a fuel cell that generates electric power by consuming hydrogen in the hydrogen tank; and a filling receptacle that is mounted on the slewing body, includes a filling port at a distal end thereof, and leads to the hydrogen tank. The filling port is disposed on the slewing body at a position higher than the lower surface of the slewing body and lower than the seating surface of the driver seat.

## Description

### Technical Field

The present disclosure relates to excavators including fuel cells.

### Background Art

Installing fuel cells in construction machines to achieve carbon neutrality has been studied. A known example of an excavator equipped with fuel cells is the hydraulic excavator disclosed in Patent Literature (PTL) 1. In the hydraulic excavator disclosed in PTL 1, fuel cells generate electric power using hydrogen supplied from tanks and oxygen in the atmosphere. The generated electric power is supplied to an electric pump device. As a result, working oil is discharged from the electric pump device, and when the working oil is supplied to a hydraulic actuator such as a boom cylinder, the hydraulic excavator operates.

### Citation List

### Patent Literature

PTL 1: Japanese Patent No. 7149447

### Summary of Invention

### Technical Problem

In an excavator that actuates an electrical pump device by fuel cells, such as the hydraulic excavator disclosed in PTL 1, it is likely that a hydrogen tank is filled with hydrogen through a filling receptacle not illustrated in the drawings. In a conventional hydraulic excavator equipped with a diesel engine, an oil filler port corresponding to a filling port of the filling receptacle is disposed in the upper surface of the slewing body as diesel fuel is a liquid. Therefore, when referring to the oil filler port of a conventional hydraulic excavator equipped with a diesel engine, the filling receptacle would be positioned in the upper surface of the slewing body. In this case, an operator who fuels the excavator needs to climb up to and down from the upper surface of the slewing body with a fueling nozzle held in their hand. Meanwhile, hydraulic excavators equipped with fuel cells are expected to require more frequent fueling than conventional hydraulic excavators; thus, there is a need to improve the efficiency of the refueling operation.

Thus, an object of the first disclosure and the second disclosure is to provide an excavator capable of improving the efficiency of the refueling operation.

### Solution to Problem

An excavator according to the first disclosure includes: a slewing body rotatably mounted on a traveling device and including a cabin in which a driver seat is disposed; a hydrogen tank disposed within the slewing body; a fuel cell that generates electric power by consuming hydrogen in the hydrogen tank; and a filling receptacle mounted on the slewing body and leading to the hydrogen tank, the filling receptacle including a filling port at a distal end thereof. The filling port is disposed on the slewing body at a position higher than a lower surface of the slewing body and lower than a seating surface of the driver seat.

According to the first disclosure, the filling port of the filling receptacle is disposed at a position higher than the lower surface of the slewing body and lower than the seating surface of the driver seat. Therefore, the filling port can be positioned at a height above the ground. As a result, sand and dust from the ground can be kept from accumulating in the filling port. Furthermore, the seating surface is disposed at an accessible height that facilitates boarding and alighting. Since the filling port is disposed at a position higher than the lower surface of the slewing body and lower than the seating surface of the driver seat, accessibility to the filling port can be improved. This reduces the need for refueling personnel to assume extremely awkward postures or experience undue physical burden during the refueling process. Thus, the refueling operation can be facilitated. Accordingly, the efficiency of the refueling operation can be improved.

An excavator according to the second disclosure includes: a slewing body rotatably mounted on a traveling device; a hydrogen tank disposed within the slewing body; a fuel cell that generates electric power by consuming hydrogen in the hydrogen tank; and a filling receptacle mounted on the slewing body and leading to the hydrogen tank. The slewing body includes: an outer cover that covers the hydrogen tank; and an outer frame that supports the outer cover. The filling receptacle is mounted on the outer frame.

According to the second disclosure, the filling receptacle is mounted on the outer frame. Therefore, the filling receptacle can be easily accessed. Accordingly, the efficiency of the refueling operation can be improved. Furthermore, the structure in which the filling receptacle is mounted on the outer frame allows the filling receptacle to be easily mounted on the slewing body.

### Advantageous Effects of Invention

According to the first disclosure and the second disclosure, the efficiency of the refueling operation can be improved.

The above object, other objects, features, and advantages of the present disclosure will be made clear by the following detailed explanation of preferred embodiments with reference to the attached drawings.

### Brief Description of Drawings

[Fig. 1] Fig. 1 is a perspective view of an excavator according to Embodiment 1 of the present disclosure.
[Fig. 2] Fig. 2 is a plan view of the excavator of Fig. 1.
[Fig. 3] Fig. 3 is a side view of the excavator of Fig. 1.
[Fig. 4] Fig. 4 is a plan view of the excavator of Fig. 2 with a portion cut away.
[Fig. 5] Fig. 5 is an enlarged side view of a portion of the excavator of Fig. 3.
[Fig. 6] Fig. 6 is an enlarged perspective view of the vicinity of a filling receptacle of the excavator illustrated in Fig. 3.
[Fig. 7] Fig. 7 is an enlarged cross-sectional view of the vicinity of the filling receptacle of the excavator illustrated in Fig. 3.
[Fig. 8] Fig. 8 is an enlarged perspective view of the vicinity of a filling receptacle of an excavator according to Embodiment 2 of the present disclosure.
[Fig. 9] Fig. 9 is an enlarged cross-sectional view of the vicinity of a filling receptacle of the excavator illustrated in Fig. 8.
[Fig. 10] Fig. 10 is an enlarged perspective view of an excavator according to Embodiment 3 of the present disclosure.
[Fig. 11] Fig. 11 is an enlarged side view of an excavator according to Embodiment 4 of the present disclosure.
[Fig. 12] Fig. 12 is an enlarged side view of an excavator according to Embodiment 5 of the present disclosure.
[Fig. 13] Fig. 13 is an enlarged side view of an excavator according to Embodiment 6 of the present disclosure.

### Description of Embodiments

Hereinafter, excavators 1, 1A to 1E according to Embodiments 1 to 6 of the present disclosure will be described with reference to the aforementioned drawings. Note that the concept of directions mentioned in the following description is used for the sake of explanation; the orientations, etc., of elements according to the invention are not limited to these directions. Each of the excavators 1, 1A to 1E described below is merely an embodiment of the present disclosure. Thus, the present disclosure is not limited to the embodiments and may be subject to addition, deletion, and alteration within the scope of the essence of the invention.

### <Embodiment 1>

### [Excavator]

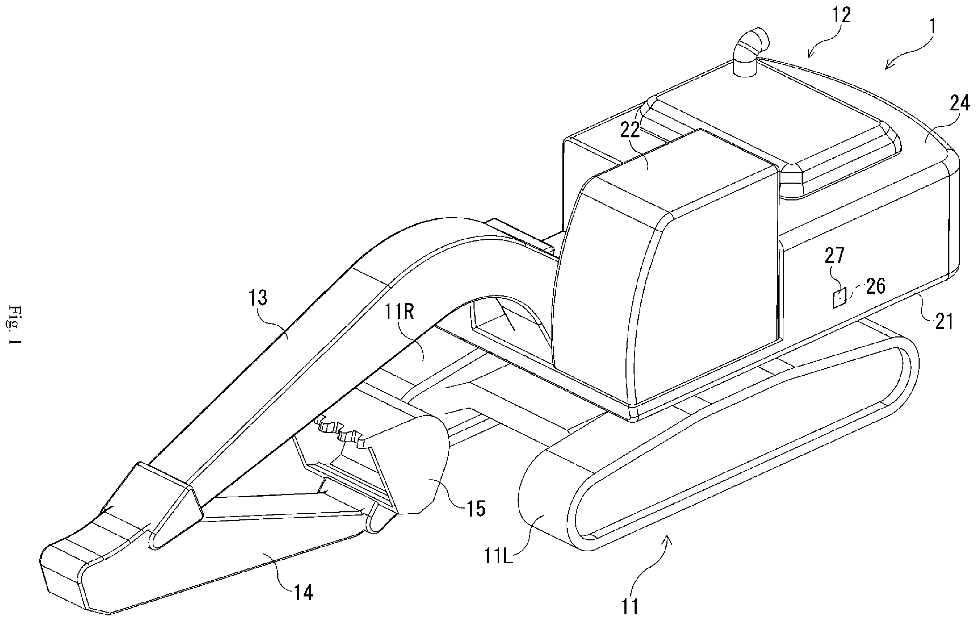

The excavator 1 illustrated in Fig. 1, which is an electric excavator, operates using hydrogen as a fuel. The excavator 1 is, for example, a mid-size excavator having an operating weight of 10 tons to 31 tons. The excavator 1 includes a traveling device 11, a slewing body 12, a boom 13, an arm 14, and the bucket 15. The traveling device 11 includes, for example, a pair of crawlers 11L, 11R. Note that the traveling device 11 may include a plurality of wheels in place of the pair of crawlers 11L, 11R. Each of the crawlers 11L, 11R can be driven to move in various directions. The slewing body 12 is disposed on the traveling device 11 so as to be rotatable about a pivot axis L1 extending in the vertical direction, which is an example of the height direction. The boom 13, which is an example of the work equipment, is disposed on the slewing body 12 so as to be vertically pivotable. The arm 14 is disposed on a leading end portion of the boom 13 so as to be pivotable in the longitudinal direction, which is an example of the first direction. Furthermore, the bucket 15 is disposed on a leading end portion of the arm 14 so as to be longitudinally or vertically pivotable. Note that the longitudinal direction is, for example, the direction in which the boom 13 extends.

Furthermore, a hydraulic actuator not illustrated in the drawings is disposed in each of the traveling device 11, the slewing body 12, the boom 13, the arm 14, and the bucket 15. More specifically, traveling motors are disposed in the respective crawlers 11L, 11R of the traveling device 11. The traveling motors are supplied with working fluid to drive the crawlers 11L, 11R. This allows the traveling device 11 to move in various directions. Note that the working fluid is, for example, a liquid such as oil. Furthermore, a slewing motor not illustrated in the drawings is disposed in the slewing body 12. When supplied with the working fluid, the slewing motor causes the slewing body 12 to slew. Furthermore, cylinders not illustrated in the drawings are disposed on the boom 13, the arm 14, and the bucket 15. When supplied with the working fluid, the cylinders pivot the boom 13, the arm 14, and the bucket 15.

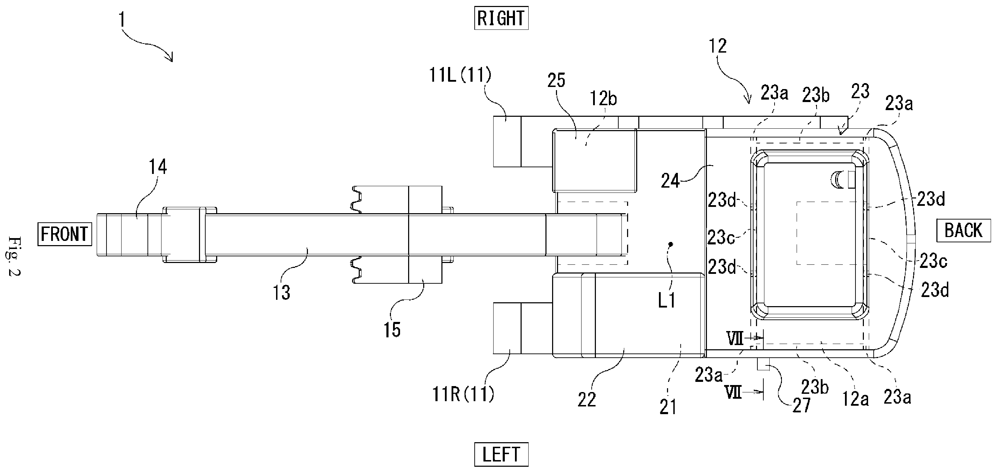

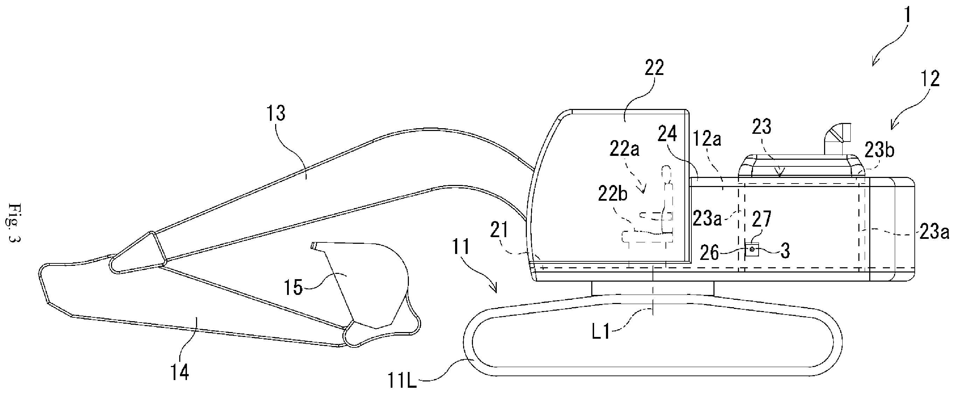

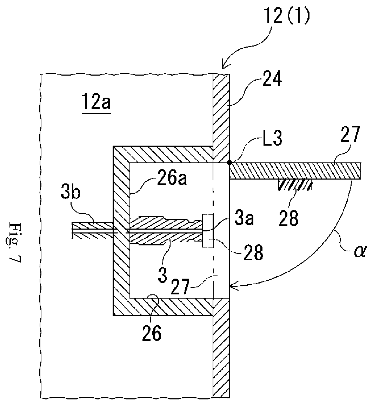

The slewing body 12 is configured as follows. Specifically, the slewing body 12 includes a slewing frame 21, a cabin 22, an outer frame 23, a first outer cover 24, and a second outer cover 25, as illustrated in Figs. 2 and 3. More specifically, the slewing body 12 further includes a housing recess 26, a lid member 27, and a sealing member 28 (refer to Fig. 7). A slewing frame 21 is rotatably disposed on the traveling device 11. The slewing frame 21 is a frame serving as a base of the slewing body 12. The boom 13 is disposed on the front portion of the slewing frame 21 that is located at the center in the vehicle width direction so that the boom 13 is vertically pivotable. Note that the vehicle width direction is a direction perpendicular to the longitudinal and vertical directions and, in the present embodiment, is the lateral direction. Various elements to be described in detail later are disposed on the slewing frame 21.

The cabin 22 is configured to allow a driver or an operator to be seated therein. More specifically, the interior of the cabin 22 includes a driver seat 22a. The driver seat 22a includes a seating surface 22b on which a driver or an operator can be seated. The seating surface 22b of the driver seat 22a in a mid-size excavator is located, for example, at a height of 400 mm to 550 mm from the lower surface of the slewing body 12. In the present embodiment, the seating surface 22b of the driver seat 22a is located at a height of 550 mm from the lower surface of the slewing body 12. Note that the lower surface is a surface of the slewing body 12 that faces the crawlers 11L, 11R of the traveling device 11. Note that the lower surface is a surface of the slewing body 12 that when the traveling device includes wheels, faces the wheels. The cabin 22 is located, for example, in a front area of the slewing body 12 that is located on one side in the vehicle width direction, that is, the left side in the present embodiment. More specifically, the cabin 22 is disposed on the slewing frame 21. The cabin 22 is positioned in a front area of the slewing frame 21, on the left side of the boom 13.

The outer frame 23 supports the first outer cover 24, which will be described in detail later. The outer frame 23 is disposed in a rear area of the slewing body 12. More specifically, the outer frame 23 stands on the slewing frame 21 on the rear side within the slewing body 12. In the present embodiment, the outer frame 23 is a frame body in the approximate shape of a rectangular parallelepiped. The outer frame 23 defines a first housing space 12a therein.

More specifically, the outer frame 23 includes, for example, a plurality of vertical frame parts 23a, a horizontal frame part 23b, and a cross frame part 23c. The plurality of vertical frame parts 23a, each of which is an example of the side frame part, stand on the slewing frame 21. The plurality of vertical frame parts 23a are spaced part in the longitudinal direction and arranged at opposite ends in the vehicle width direction. In the present embodiment, four vertical frame parts 23a stand on the slewing frame 21. The four vertical frame parts 23a are arranged at the four corners of the outer frame 23 in a plan view. Specifically, the four vertical frame parts 23a are arranged in longitudinally separated pairs at the opposite ends of the slewing frame 21 in the vehicle width direction.

The horizontal frame parts 23b are disposed at the opposite ends in the vehicle width direction to extend between the plurality of vertical frame parts 23a. In the present embodiment, a pair of horizontal frame parts 23b are provided. The pair of horizontal frame parts 23b are disposed at the opposite ends in the vehicle width direction within the slewing body 12. Each of the pair of horizontal frame parts 23b is disposed to extend between two longitudinally separated vertical frame parts 23a.

The cross frame part 23c is disposed to extend in the vehicle width direction. In the present embodiment, a pair of cross frame parts 23c are provided. Note that the number of cross frame parts 23c may be three or more. The pair of cross frame parts 23c are spaced part in the longitudinal direction and disposed within the slewing body 12. Each of the pair of cross frame parts 23c is disposed to extend between two vertical frame parts 23a spaced apart from each other in the vehicle width direction. Note that in the present embodiment, a plurality of support frame parts 23d are arranged on each of the pair of cross frame parts 23c to be spaced apart in the vehicle width direction. The support frame parts 23d stand on the slewing frame 21 and support the pair of cross frame parts 23c.

The first outer cover 24 is disposed to cover the outer frame 23 in the rear area of the slewing body 12. The first outer cover 24 is supported on the outer frame 23. Accordingly, the first housing space 12a inside the outer frame 23 is enclosed by the first outer cover 24. In the present embodiment, the first outer cover 24 is formed in the approximate shape of a rectangular parallelepiped and is sized larger than the outer frame 23.

The second outer cover 25 is disposed in the front area of the slewing body 12. More specifically, the second outer cover 25 is disposed on the opposite side of the boom 13 from the cabin 22. A second housing space 12b is formed internally of the second outer cover 25.

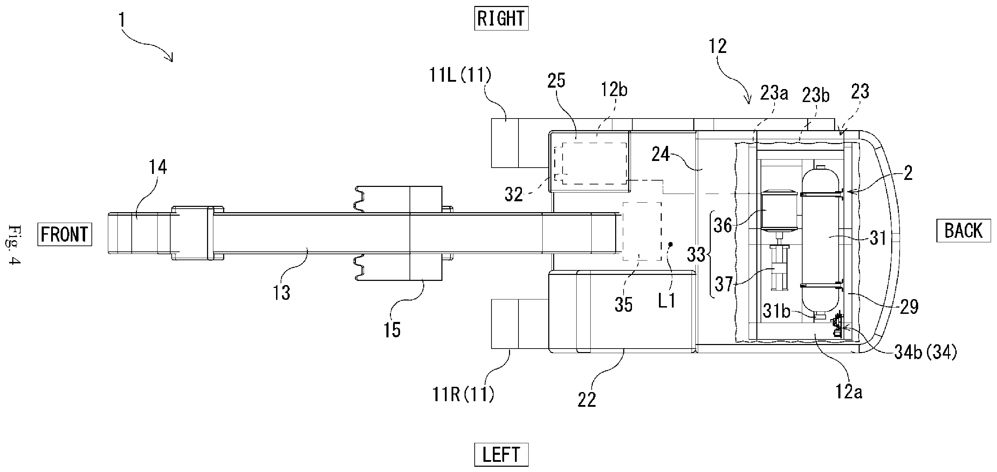

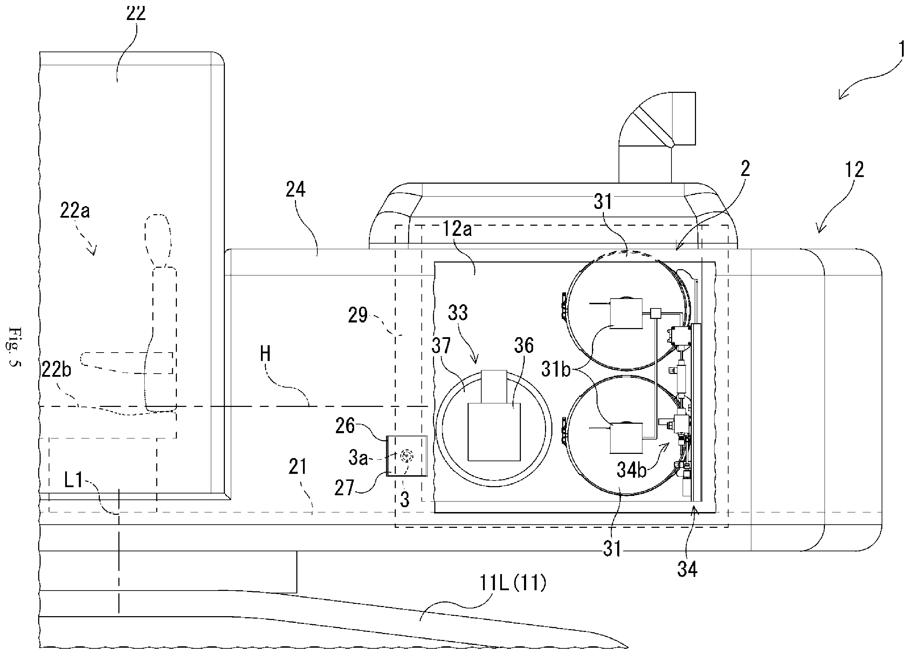

The slewing body 12 incudes a securing frame 29, as illustrated in Fig. 4. The securing frame 29 is disposed within the slewing body 12. More specifically, the securing frame 29 is disposed in the first housing space 12a. The hydrogen tank 31 and the electric pump device 33 are mounted on the securing frame 29 as will be described in detail later. More specifically, the securing frame 29 is a laterally extending frame body formed, for example, in a U-shape in a left side view, as illustrated in Fig. 5. In other words, the securing frame 29 is disposed in the first housing space 12a such that the opening of the securing frame 29 faces upward. The hydrogen tank 31 and the electric pump device 33, which will be described in detail later, are housed in the securing frame 29. Note that the shape of the securing frame 29 is not limited to a U-shape in the left side view, but may alternatively be an S-shape or a rectangular shape.

The housing recess 26 is formed on a side surface of the slewing body 12. More specifically, the housing recess 26 is formed on the left side surface of the slewing body 12. In the present embodiment, the housing recess 26 is formed in the left side surface of the first outer cover 24. More specifically, the housing recess 26 is formed in a laterally intermediate portion of the left side surface of the first outer cover 24. Note that the housing recess 26 may alternatively be formed on the right side surface of the slewing body 12, that is, the right side surface of the first outer cover 24 in the present embodiment. The housing recess 26 is disposed at a position vertically higher than the lower surface of the slewing body 12 and vertically lower than the seating surface 22b of the driver seat 22a. More specifically, the housing recess 26 is disposed at a position vertically higher than the slewing frame 21. In the present embodiment, the housing recess 26 is positioned lower than a height H, which is equal to the height of the seating surface 22b of the driver seat 22a. The equal height herein does not necessarily need to be the same and may alternatively be set to a height lower than the seating surface 22b.

The housing recess 26 positioned as described above has a rectangular shape in the left side view. Note that the housing recess 26 may alternatively be formed in a shape other than a rectangular shape, such as a circular shape, in the left side view. The housing recess 26 is formed to be recessed inward from the left side surface of the slewing body 12. More specifically, the housing recess 26 is formed to be recessed inward from the left side surface of the first outer cover 24. The housing recess 26 is formed with a bottom wall to house therein a filling receptacle 3, which will be described in detail later.

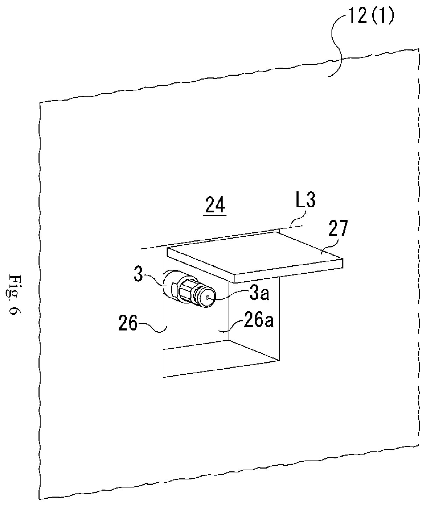

The lid member 27 closes the housing recess 26. More specifically, the lid member 27 is configured to open and close the housing recess 26, as illustrated in Figs. 6 and 7. In the present embodiment, the lid member 27 rotates about a rotation axis L3 thereof to open and close the housing recess 26. The rotation axis L3 is located above the housing recess 26 and extends in a cross direction crossing the vertical direction. The rotation axis L3 is, for example, a longitudinally extending axis. In the present embodiment, the lid member 27 is suspended from the first outer cover 24 so as to fit into the opening of the housing recess 26 via a hinge not illustrated in the drawings. The lid member 27 rotates about the rotation axis L3 via the hinge. In other words, the lid member 27 pivots vertically via the hinge. Thus, the lid member 27 opens and closes the housing recess 26. More specifically, the lid member 27 closes the housing recess 26 while being hung from an upper portion of the opening end of the housing recess 26, and then rotates through up to a maximum angle α about the rotation axis L3. The maximum angle α is, for example, in the range of 45 degrees to 180 degrees, and preferably in the range of 60 degrees to 120 degrees. In the present embodiment, the maximum angle α is 90 degrees. Note that when the maximum angel α is in the range of 60 degrees to 120 degrees, the lid member 27 plays a role as a canopy.

The sealing member 28 is disposed on the lid member 27. More specifically, the sealing member 28 is disposed at a position corresponding to a filling port 3a of the filling receptacle 3, which will be described in detail later. In the present embodiment, when the lid member 27 is closed, the sealing member 28 abuts the filling port 3a of the filling receptacle 3. The sealing member 28 is positioned, for example, on a surface of the lid member 27 that faces the filling port 3a of the filling receptacle 3 such that when the lid member 27 is closed, the sealing member 28 abuts the filling port 3a of the filling receptacle 3. The sealing member 28, which is made of synthetic rubber or the like, for example, abuts and hermetically closes the filling port 3a.

### [Hydraulic Drive System]

The excavator 1 includes: the hydraulic drive system 2 illustrated in Fig. 4; and the filling receptacle 3 illustrated in Fig. 5. The hydraulic drive system 2 supplies the working fluid to each of the aforementioned hydraulic actuators to drive the hydraulic actuator. The hydraulic drive system 2 is disposed within the slewing body 12. The hydraulic drive system 2 includes a plurality of hydrogen tanks 31 and a fuel cell 32. Note that in the present embodiment, the hydraulic drive system 2 includes two hydrogen tanks 31. The number of hydrogen tanks 31 included in the hydraulic drive system 2 is not limited to two and may alternatively be three or more or may alternatively be one. The hydraulic drive system 2 further includes the electric pump device 33, a supply system unit 34 and a multi-control valve 35.

### [Hydrogen Tank]

The two hydrogen tanks 31 illustrated in Fig. 5 store hydrogen to be supplied to the fuel cell 32 (refer to Fig. 4). The two hydrogen tanks 31 are connected to the fuel cell 32 via the supply system unit 34, which will be described in detail later. The two hydrogen tanks 31 are connected to the fuel cell 32 via the supply system unit 34. In other words, the two hydrogen tanks 31 supply hydrogen to the fuel cell 32 via the supply system unit 34.

The two hydrogen tanks 31 configured as described above are arranged within the slewing body 12 as follows, for example. Specifically, each of the hydrogen tanks 31 is housed in the first housing space 12a, as illustrated in Fig. 4. More specifically, each of the hydrogen tanks 31 is housed within the securing frame 29 located in the first housing space 12a. The two hydrogen tanks 31 are vertically arranged in the rear area within the securing frame 29, as illustrated in Fig. 5. More specifically, the two hydrogen tanks 31 include tank valves 31b that control the flow of hydrogen drained therefrom, and are disposed such that the tank valves 31b are positioned on the left side. Furthermore, the two hydrogen tanks 31 are mounted on the securing frame 29 and secured to the slewing body 12. Note that the tank valves 31b may be positioned on the right side.

Furthermore, the hydrogen tank 31 is connected to the fuel cell 32, which will be described in detail later, via the supply system unit 34. The supply system unit 34 includes a valve group 34b made up of a plurality of valves. The valve group 34b is connected to the tank valve 31b of the hydrogen tank 31. The tank valve 31b is connected to the fuel cell 32 via the valve group. The plurality of valves included in the valve group 34b regulate the hydrogen supply from the hydrogen tank 31 to the fuel cell 32. Examples of the plurality of valves include a high-pressure reducing valve, a shutoff valve, a low-pressure reducing valve, and a manual valve. Each valve of the valve group 34b depressurizes the high-pressure hydrogen stored in the hydrogen tank 31 to a low pressure (for example, 100 kPa) and supplies the hydrogen to the fuel cell 32.

### [Fuel Cell]

The fuel cell 32 illustrated in Fig. 2 generates electric power by consuming the hydrogen stored in the hydrogen tank 31. More specifically, the fuel cell 32 generates electric power through a chemical reaction between the hydrogen supplied from the hydrogen tank 31 and the oxygen extracted from ambient air. The fuel cell 32 is electrically connected to the electric pump device 33, which will be described in detail later, and supplies the generated electric power to the electric pump device 33. Accordingly, the electric pump device 33 is driven. Note that the fuel cell 32 may be a single cell or may have a stack structure including stacked cells. The fuel cell 32 is housed in the second housing space 12b, as illustrated in Fig. 4.

### [Electric Pump Device]

The electric pump device 33 illustrated in Figs. 4 and 5 is an electrically driven hydraulic pump device. With the electric power supplied from the fuel cell 32, the electric pump device 33 is driven to discharge the working fluid. More specifically, the electric pump device 33 includes a hydraulic pump 36 and an electric motor 37. The hydraulic pump 36 is rotatably driven to discharge the working fluid. The hydraulic pump 36 is, for example, a tandem swash plate piston pump. Note that the hydraulic pump 36 may alternatively be a single-unit swash plate piston pump or may alternatively be another type of hydraulic pump such as an axial piston pump or a gear pump. The electric motor 37 is coupled to the hydraulic pump 36. The electric motor 37 receives the electric power supplied thereto, and rotatably drives the hydraulic pump 36. Accordingly, the hydraulic pump 36 discharges the working fluid. In the present embodiment, the hydraulic pump 36 and the electric motor 37 share a drive shaft (not illustrated in the drawings), and the hydraulic pump 36 and the electric motor 37 may be arranged in a straight line.

The electric pump device 33 configured as described above is disposed within the slewing body 12 as follows, for example. Specifically, the electric pump device 33 is housed in the first housing space 12a. More specifically, the electric pump device 33 is housed within the securing frame 29 located in the first housing space 12a. The electric pump device 33 is housed within the securing frame 29 such that the electric pump device 33 and the hydrogen tanks 31 extend parallel to each other, for example. Furthermore, the electric pump device 33 is disposed to be longitudinally spaced apart from the two hydrogen tanks 31.

The multi-control valve 35 is connected to the electric pump device 33. Furthermore, the multi-control valve 35 is connected to each hydraulic actuator (not illustrated in the drawings). In other words, the electrical pump device 33 is connected to each hydraulic actuator (not illustrated in the drawings) via the multi-control valve 35. The multi-control valve 35 can control the flow of the working fluid discharged from the electric pump device 33 and supply the working fluid to each hydraulic actuator. Accordingly, the traveling device 11, the slewing body 12, the boom 13, the arm 14, and the bucket 15 can be actuated.

### [Filling Receptacle]

The filling receptacle 3 illustrated in Fig. 6 is connected to the hydrogen tank 31. More specifically, the filling receptacle 3 includes a filling pipe 3b connected to a proximal end thereof, as illustrated in Fig. 7, and is connected to the hydrogen tank 31 via the filling pipe 3b. The filling receptacle 3 is configured such that a dispenser nozzle (not illustrated in the drawings) can be detachably attached thereto. The filling receptacle 3 includes the filling port 3a at a distal end thereof, and hydrogen is supplied to the filling port 3a through the attached dispenser nozzle. Furthermore, the filling receptacle 3 fills the hydrogen tank 31 with hydrogen through the filling pipe 3b.

The filling receptacle 3 is disposed on the slewing body 12. More specifically, the filling receptacle 3 is disposed on a side surface of the slewing body 12. In the present embodiment, the filling receptacle 3 is disposed on the left side surface of the slewing body 12. More specifically, the filling receptacle 3 is disposed on the housing recess 26. In the present embodiment, the filling receptacle 3 is disposed on a bottom portion 26a of the housing recess 26. In the present embodiment, the filling receptacle 3 is disposed on the bottom portion 26a so as to project into the interior of the housing recess 26, and the filling port 3a is positioned within the housing recess 26. The filling port 3a faces leftward relative to the slewing body 12 through the opening of the housing recess 26. Therefore, when the lid member 27 is open, the filling port 3a is exposed. Accordingly, the dispenser nozzle is attached to the filling port 3a, and hydrogen is supplied through the filling port 3a. The filling port 3a is in abutment with the sealing member 28 when the lid member 27 is closed. More specifically, the sealing member 28 abuts the entire filling port 3a, thereby hermetically sealing the filling port 3a.

In the filling receptacle 3 arranged as described above, the filling port 3a is disposed at a position higher than the lower surface of the slewing body 12 and lower than the seating surface 22b of the driver seat 22a. In the present embodiment, the filling receptacle 3 is disposed in the housing recess 26. As mentioned above, the housing recess 26 is disposed at a position higher than the lower surface of the slewing body 12 and lower than the seating surface 22b of the driver seat 22a. More specifically, the housing recess 26 is disposed at a position higher than the slewing frame 21 and lower than the seating surface 22b of the driver seat 22a. Therefore, the filling port 3a is also disposed at a position higher than the slewing frame 21 and lower than the seating surface 22b of the driver seat 22a.

### [Operation of Excavator]

In the excavator 1, the hydraulic drive system 2 operates as follows. Specifically, in the hydraulic drive system 2, hydrogen is supplied from the hydrogen tank 31 to the fuel cell 32 via the supply system unit 34. Accordingly, the fuel cell 32 generates electric power using the hydrogen and the oxygen contained in the atmosphere. The generated electric power is supplied from the fuel cell 32 to the electric pump device 33. More specifically, the generated electric power is supplied from the fuel cell 32 to the electric motor 37. Accordingly, the electric motor 37 drives the hydraulic pump 36, and the working fluid is discharged. When the working fluid is supplied to each hydraulic actuator via the multi-control valve 35, the hydraulic actuator is driven. Thus, the excavator 1 performs various operations.

In the excavator 1 configured as described above, the hydrogen tank 31 is filled with hydrogen as follows. First, in the excavator 1, the lid member 27 is rotated to open the housing recess 26. At this time, the maximum angle α through which the lid member 27 can rotate is 90 degrees, that is, in the range of 60 degrees to 120 degrees and therefore, the lid member 27 can be used as a canopy for the housing recess 26. Furthermore, when the housing recess 26 is opened by rotating the lid member 27, the filling port 3a of the filling receptacle 3 is exposed on the left side. Subsequently, the dispenser nozzle is attached to the filling receptacle 3, and hydrogen is supplied to the filling port 3a through the dispenser nozzle. The supplied hydrogen is supplied to the hydrogen tank 31 through the filling pipe.

Thereafter, when the filling of the hydrogen tank 31 with hydrogen is complete, the dispenser nozzle is detached from the filling receptacle 3. Refueling personnel or the like then rotates the lid member 27 about the rotation axis L3 to swing the lid member 27 downward. Thus, the housing recess 26 is closed by the lid member 27. When the housing recess 26 is closed, the sealing member 28 on the lid member 27 abuts the filling port 3a of the filling receptacle 3, and the filling port 3a is sealed. This reduces the ingress of contaminants or moisture into the filling port 3a when the housing recess 26 is closed.

In the excavator 1 according to the present embodiment, the filling port 3a of the filling receptacle 3 is disposed at a position higher than the lower surface of the slewing body 12 and lower than the seating surface 22b of the driver seat 22a. Therefore, the filling port 3a can be positioned at a height above the ground. As a result, sand and dust from the ground can be kept from accumulating in the filling port 3a. Furthermore, the seating surface 22b is disposed at an accessible height that facilitates boarding and alighting. Since the filling port 3a is disposed at a position higher than the lower surface of the slewing body 12 and lower than the seating surface 22b of the driver seat 22a, accessibility to the filling port 3a can be improved. This reduces the need for refueling personnel to assume extremely awkward postures or experience undue physical burden during the refueling process. Thus, the refueling operation can be facilitated. Accordingly, the efficiency of the refueling operation can be improved.

Furthermore, in the excavator 1 according to the present embodiment, the filling port 3a is disposed at a position higher than the slewing frame 21. Therefore, the filling port 3a can be disposed at an elevated position, for example, between the chest and shoulder height of refueling personnel. As a result, the refueling personnel can easily perform the hydrogen refueling operation while standing upright. Accordingly, the efficiency of the refueling operation can be improved.

Furthermore, in the excavator 1 according to the present embodiment, the housing recess 26 houses the filling receptacle 3. The lid member 27 which closes the housing recess 26 rotates about the rotation axis L3 to open and close the housing recess 26. The rotation axis L3 is located above the housing recess 26 and extends laterally. Therefore, when the lid member 27 is rotated, the lid member 27 can be used as a canopy for the housing recess 26. Consequently, the lid member 27 can reduce the ingress of contaminants or moisture into the housing recess 26. Thus, the resistance of the filling receptacle 3 to contaminants can be improved.

Furthermore, in the excavator 1 according to the present embodiment, the sealing member 28 abuts the filling port 3a when the lid member 27 is closed. Therefore, it is possible to reduce the ingress of contaminants or moisture into the filling port 3a when the lid member 27 is closed. Thus, the resistance of the filling receptacle 3 to contaminants can be improved.

The driver seat 22a is located at a height of 400 mm to 550 mm above the lower surface of the slewing body 12. Therefore, the refueling personnel can perform the hydrogen refueling operation while standing upright.

### <Embodiment 2>

An excavator 1A according to Embodiment 2 includes elements similar to those of the excavator 1 according to Embodiment 1. Therefore, the elements of the excavator 1A according to Embodiment 2 will be described focusing on differences from the excavator 1 according to Embodiment 1, and elements thereof that are the same as those according to Embodiment 1 will be assigned the same reference signs and description thereof will be omitted. The same applies to excavators 1B to 1E according to Embodiments 3 to 6 described below, and elements thereof that are the same as those according to the embodiment described above will be assigned the same reference signs and description thereof will be omitted.

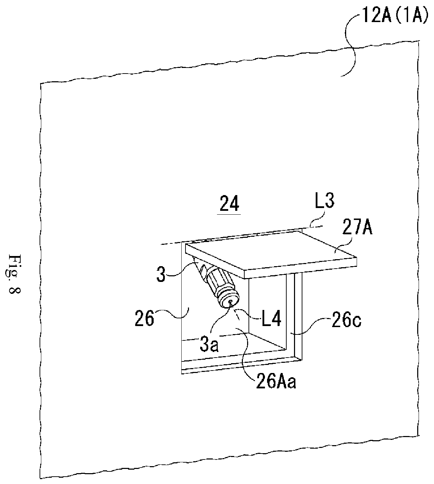

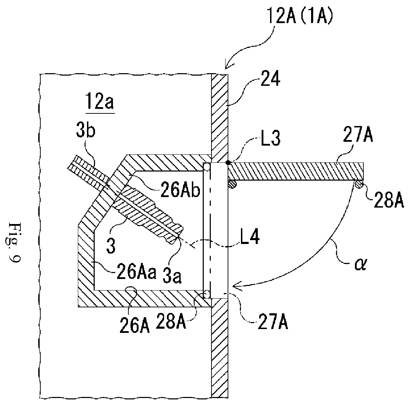

In the excavator 1A according to Embodiment 2, the filling receptacle 3 is disposed as follows, as illustrated in Figs. 8 and 9. Specifically, the filling receptacle 3 extends along an axis L4. The filling receptacle 3 is disposed such that the axis L4 extends diagonally downward. More specifically, a slewing body 12A further includes a housing recess 26A, a lid member 27A, and a sealing member 28A.

For example, a bottom portion 26Aa of the housing recess 26A is at least partially inclined and oriented diagonally downward. In the present embodiment, an upper portion 26Ab of the bottom portion 26Aa is inclined diagonally downward. The filling receptacle 3 is disposed on the upper portion 26Ab so as to project in a direction crossing the upper portion 26Ab, that is, a direction perpendicular thereto in the present embodiment. Thus, the filling receptacle 3 is disposed such that the axis L4 thereof extends diagonally downward.

Furthermore, a sealing groove 26c is formed on the slewing body 12A around the opening end of the housing recess 26A. More specifically, the sealing groove 26c is formed on a sides surface of the first outer cover 24 around the opening end of the housing recess 26A. The sealing groove 26c is formed along the entire periphery of the opening of the housing recess 26A. In the present embodiment, the sealing groove 26c is formed, for example, in a rectangular shape in a side view.

The lid member 27A is sized larger than the opening of the housing recess 26A. More specifically, the lid member 27A is configured to align with the sealing groove 26c and fit into the sealing groove 26c. In the present embodiment, the lid member 27A is formed in a rectangular shape in a side view, similar to the sealing groove 26c, and is sized slightly smaller than the sealing groove 26c. Furthermore, similar to the lid member 27 according to Embodiment 1, the lid member 27A is suspended from the first outer cover 24 so as to fit into the opening of the housing recess 26A via a hinge not illustrated in the drawings. The lid member 27A rotates about the rotation axis L3 via the hinge. In other words, the lid member 27A pivots vertically via the hinge. Thus, the lid member 27A opens and closes the housing recess 26A.

The sealing member 28A is disposed on the lid member 27A. When the lid member 27A is closed, the sealing member 28A abuts the outer peripheral edge of the housing recess 26A. Thus, the housing recess 26A is hermetically sealed. More specifically, the sealing member 28A is disposed on the surface of the lid member 27A that faces the opening of the housing recess 26A. The sealing member 28A has outer dimensions larger than the opening of the housing recess 26A. In the present embodiment, the sealing member 28A is formed into the same shape as the sealing groove 26c such that when the lid member 27A is closed, the sealing member 28A fits into the sealing groove 26c. Therefore, when the lid member 27A is closed, the sealing member 28A abuts the outer peripheral edge of the housing recess 26A, hermetically sealing the housing recess 26A. The sealing member 28A is, for example, a loop-shaped member made of synthetic rubber or the like. Note that the sealing member 28A does not necessarily need to be a loop-shaped member and may alternatively be a plate-shaped member.

In the excavator 1A according to Embodiment 2, the filling receptacle 3 is disposed such that the axis L4 extends diagonally downward. Even when the filling port 3a is located at an elevated position, the dispenser nozzle can be inserted from below and thus, the efficiency of the refueling operation can be further improved. Furthermore, because the filling port 3a is oriented downward, the accumulation of contaminants or moisture within the filling port 3a can be reduced. Thus, the resistance of the filling receptacle 3 to contaminants can be improved.

Furthermore, in the excavator 1A according to Embodiment 2, when the lid member 27A is closed, the sealing member 28A abuts the outer peripheral edge of the housing recess 26A. Therefore, it is possible to reduce the ingress of contaminants or moisture into the housing recess 26A when the housing recess 26A is closed. Thus, the resistance of the filling receptacle to contaminants can be improved.

The excavator 1A according to Embodiment 2 produces substantially the same advantageous effects as those produced by the excavator 1 according to Embodiment 1.

### <Embodiment 3>

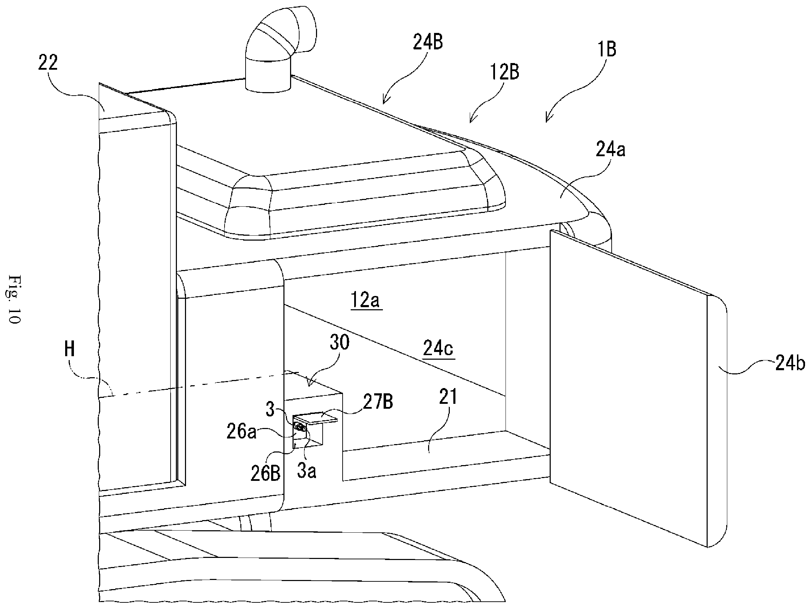

In an excavator 1B according to Embodiment 3, a first outer cover 24B of a slewing body 12B is configured as follows, as illustrated in Fig. 10. Specifically, the first outer cover 24B includes a cover body 24a and an access door 24b. The cover body 24a is disposed to cover the outer frame 23 in the rear area of the slewing body 12B and is supported on the outer frame 23. Accordingly, the first housing space 12a inside the outer frame 23 is enclosed by the cover body 24a. The cover body 24a includes an opening 24c in a side surface. The opening 24c is located, for example, in the left side surface of the cover body 24a. In the present embodiment, the opening 24c is provided by forming the left side surface of the cover body 24a in the shape of an inverted recess. Note that the opening 24c does not necessarily need to be a large opening and may alternatively be a window-style opening. In the excavator 1B, the interior of the first outer cover 24 is visible through the opening 24c. The opening 24c faces the outer frame 23 although not illustrated in the drawings, and the outer frame 23 is exposed on the left side through the opening 24c. The opening 24c is formed to be larger than the securing frame 29 in a plan view, for example. In other words, the opening 24c faces the securing frame 29. Maintenance of various elements disposed within the cover body 24a, for example, the hydrogen tank 31 and the electric pump device 33, is performed through the opening 24c.

The access door 24b closes the opening 24c. The access door 24b is configured to open and close. The access door 24b is disposed, for example, on an outer edge portion of the opening 24c via a hinge. In the present embodiment, the access door 24b is disposed on a rear portion of the outer edge portion of the opening 24c so as to be laterally pivotable. This allows an operator or the like to open the access door 24b by pulling the access door 24b toward him or herself when facing the left side surface of the first outer cover 24B.

In the excavator 1B according to Embodiment 3, the filling receptacle 3 is disposed as follows. Specifically, the slewing body 12B of the excavator 1B further includes a mounting member 30. The mounting member 30 is disposed within the slewing body 12B, more specifically, internally of the first outer cover 24. In the present embodiment, the mounting member 30 is disposed on the slewing frame 21 so as to stand on a left side portion thereof. Furthermore, the mounting member 30 is disposed in an area corresponding to the leading edge of the access door 24b. The amounting member 30 includes a housing recess 26B and a lid member 27B.

The housing recess 26B is configured in substantially the same manner as the housing recess 26 according to Embodiment 1. Specifically, the housing recess 26B is disposed in the mounting member 30, at a position vertically higher than the lower surface of the slewing body 12B and vertically lower than the seating surface 22b of the driver seat 22a. More specifically, the housing recess 26B is disposed at a position vertically higher than the slewing frame 21. In the present embodiment, the housing recess 26B is disposed, for example, at an intermediate position between the seating surface 22b of the driver seat 22a and the slewing frame 21. The housing recess 26B is formed in a rectangular shape in a left side view and includes a bottom wall, for example.

The filling receptacle 3 is disposed on the bottom portion 26a of the housing recess 26B so as to project from the bottom portion 26a into the interior of the housing recess 26B. Therefore, the filling receptacle 3 is mounted on the slewing frame 21 via the mounting member 30. The filling receptacle 3 is disposed at a position vertically higher than the lower surface of the slewing body 12B and vertically lower than the height H of the seating surface 22b of the driver seat 22a. More specifically, the filling receptacle 3 is disposed at a position vertically higher than the slewing frame 21. In the present embodiment, the filling receptacle 3 is disposed, for example, at an intermediate position between the seating surface 22b of the driver seat 22a and the slewing frame 21.

The lid member 27B is configured in substantially the same manner as the lid member 27 according to Embodiment 1. Specifically, the lid member 27B is suspended from an upper portion of the opening end of the housing recess 26B via a hinge not illustrated in the drawings. The lid member 27B rotates about the longitudinally extending rotation axis L3 located above the housing recess 26B, and opens and closes the housing recess 26B by rotation.

In the excavator 1B according to Embodiment 3, the mounting member 30 is disposed within the slewing body 12B, more specifically, internally of the first outer cover 24. Therefore, because the filling receptacle 3 is disposed within the slewing body 12B, the ingress of contaminants or moisture into the filling port 3a can be further reduced. Thus, the resistance of the filling receptacle 3 to contaminants can be further improved. Furthermore, because the access door 24b is covered by the housing recess 26B with the lid member 27B, the ingress of contaminants or moisture can be further reduced.

The excavator 1B according to Embodiment 3 produces substantially the same advantageous effects as those produced by the excavator 1 according to Embodiment 1.

### <Embodiment 4>

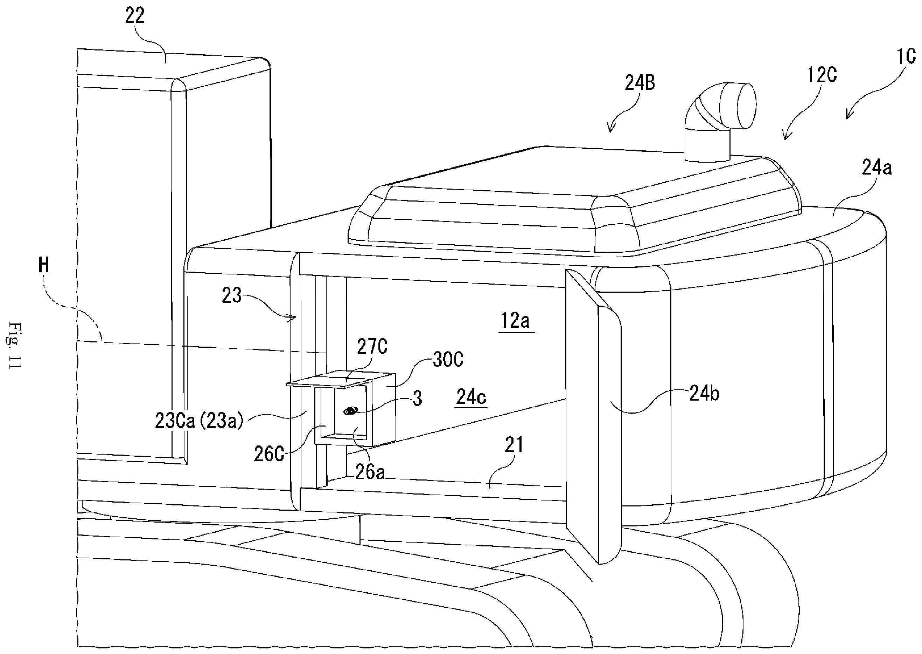

An excavator 1C according to Embodiment 4 includes the first outer cover 24B for a slewing body 12C, as illustrated in Fig. 11. The filling receptacle 3 is disposed as follows. Specifically, the filling receptacle 3 is mounted on the outer frame 23 such that the filling receptacle 3 is exposed to the exterior through the opening 24c. In the present embodiment, the filling receptacle 3 is mounted on the vertical frame part 23a, which is an example of the side frame part. More specifically, the filling receptacle 3 is mounted on a door edge frame part 23Ca, which is the vertical frame part 23a disposed in a front left area among the four vertical frame parts 23a. More specifically, the door edge frame part 23Ca is disposed on the side on which the leading edge of the access door 24b is positioned, that is, on the side opposite the rotation axis in the longitudinal direction in the present embodiment.

The slewing body 12C includes a mounting member 30C and a lid member 27C. The mounting member 30C is mounted on the door edge frame part 23Ca. More specifically, the mounting member 30C is formed, for example, in the shape of a box. The internal space of the mounting member 30C forms a housing recess 26C. The mounting member 30C is disposed on the door edge frame part 23Ca, for example, at a position higher than the lower surface of the slewing body 12C and lower than the seating surface 22b of the driver seat 22a. More specifically, the mounting member 30C is disposed at a position vertically higher than the slewing frame 21. In the present embodiment, the mounting member 30C is disposed, for example, at an intermediate position between the seating surface 22b of the driver seat 22a and the slewing frame 21. The mounting member 30C is mounted such that the housing recess 26C is exposed to the exterior through the opening 24c.

The filling receptacle 3 is disposed on the bottom portion 26a of the housing recess 26C so as to project from the bottom portion 26a into the interior of the housing recess 26C. Therefore, the filling receptacle 3 is mounted on the door edge frame part 23Ca via the mounting member 30C. The filling receptacle 3 is disposed at a position vertically higher than the lower surface of the slewing body 12C and vertically lower than the seating surface 22b of the driver seat 22a. More specifically, the filling receptacle 3 is disposed at a position vertically higher than the slewing frame 21. In the present embodiment, the filling receptacle 3 is disposed, for example, at an intermediate position between the seating surface 22b of the driver seat 22a and the slewing frame 21.

The lid member 27C is configured in substantially the same manner as the lid member 27B according to Embodiment 3. Specifically, the lid member 27C is suspended from an upper portion of the opening end of the housing recess 26C via a hinge not illustrated in the drawings. The lid member 27C rotates about the longitudinally extending rotation axis L3 located above the housing recess 26C, and opens and closes the housing recess 26C by rotation.

In the excavator 1C according to Embodiment 4, the filling receptacle 3 is mounted on the outer frame 23. Therefore, the filling receptacle 3 can be easily mounted on the slewing body 12C.

In the excavator 1C according to Embodiment 4, the filling receptacle 3 is mounted on the door edge frame part 23Ca which is disposed outboard on the left side within the slewing body 12C. Thus, since the filling receptacle 3 can be positioned on an outer left portion of the slewing body 12C, accessibility to the filling receptacle 3 can be improved.

In the excavator 1C according to Embodiment 4, the filling receptacle 3 is mounted on the door edge frame part 23Ca extending in the height direction. Therefore, regarding the mounting position of the filling receptacle 3, the design flexibility can be improved, and accessibility to the filling receptacle 3 in the height direction can be improved.

Furthermore, in the excavator 1C according to Embodiment 4, the filling receptacle is disposed on the door edge frame part 23Ca. This allows for improved accessibility to the filling receptacle 3 when the access door 24b is open. Thus, the hydrogen refueling can be facilitated.

The excavator 1C according to Embodiment 4 produces substantially the same advantageous effects as those produced by the excavator 1B according to Embodiment 3.

### <Embodiment 5>

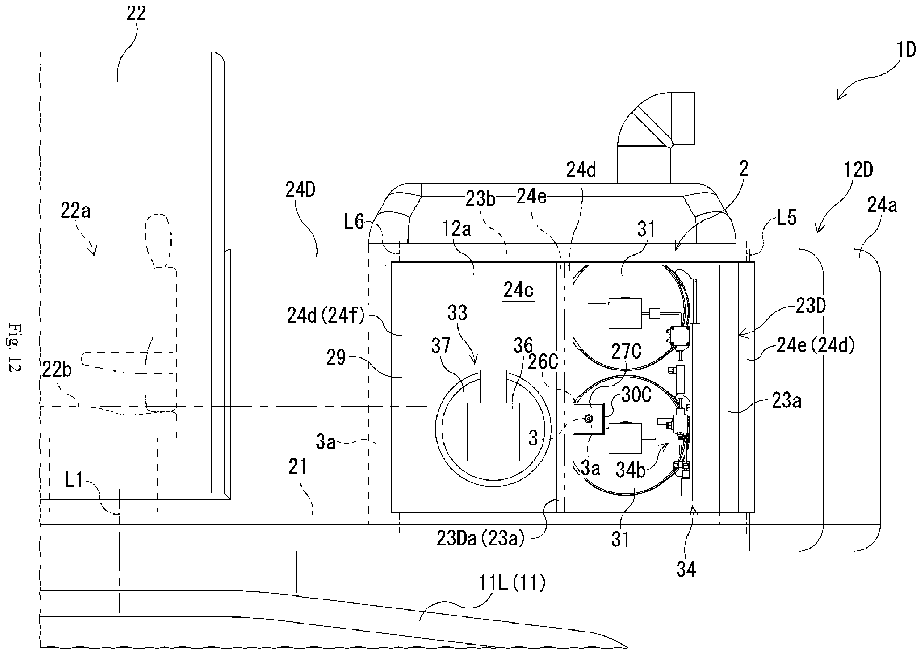

In an excavator 1D according to Embodiment 5, an outer frame 23D and a first outer cover 24D of a slewing body 12D are configured as follows, as illustrated in Fig. 12. Specifically, the first outer cover 24D includes a cover body 24a and a double door 24d. The double door 24d closes the opening 24c. The double door 24d includes a first door 24e and a second door 24f. The two doors 24e, 24f are rotatably disposed on the left and right sides on an outer edge portion of the opening 24c. In the present embodiment, the two doors 24e, 24f rotate about vertically extending axes L5, L6 on the left and right sides on the outer edge portion of the opening 24c. The two doors 24e, 24f are arranged such that the leading edges thereof abut each other. Thus, the two doors 24e, 24f are rotated to open and close the opening 24c.

In the outer frame 23D, a door edge frame part 23Da, which is an additional vertical frame part 23a, stands between the two longitudinally separated vertical frame parts 23a. The door edge frame part 23Da is disposed so as to be exposed to the exterior through the opening 24c. More specifically, the door edge frame part 23Da is disposed in an area corresponding to the leading edges of the two doors 24e, 24f. In the present embodiment, the door edge frame part 23Da is disposed, for example, on a longitudinally intermediate portion of the opening 24c. The filling receptacle 3 is mounted on the door edge frame part 23Da. More specifically, the slewing body 12D includes the mounting member 30C and the lid member 27C. The filling receptacle 3 is mounted on the door edge frame part 23Da via the mounting member 30C.

In the excavator 1D according to Embodiment 5, the door edge frame part 23Da is disposed on a door edge frame 24Da which is located at the door edges of the doors 24e, 24f of the double door 24d. This allows for improved accessibility to the filling receptacle 3 when the access door is open. Thus, the hydrogen refueling can be facilitated.

The excavator 1D according to Embodiment 5 produces substantially the same advantageous effects as those produced by the excavator 1C according to Embodiment 4.

### <Embodiment 6>

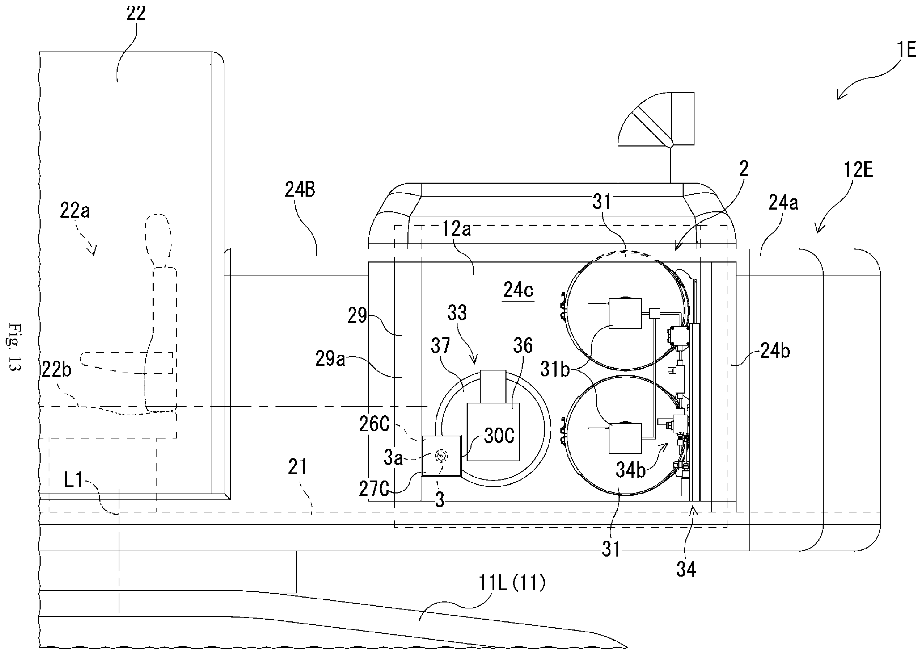

In an excavator 1E according to Embodiment 6, the filling receptacle 3 is disposed as follows, as illustrated in Fig. 13. Specifically, the filling receptacle 3 is mounted on the securing frame 29 such that the filling receptacle 3 is exposed to the exterior through the opening 24c when the access door 24b is open. More specifically, the securing frame 29 is formed, for example, in a U-shape in the left side view, as mentioned above. In other words, the securing frame 29 includes, in a front left area, a mounting frame part 29a which extends in the vertical direction. The filling receptacle 3 is mounted on the mounting frame part 29a. More specifically, a slewing body 12E includes the mounting member 30C and the lid member 27C. The filling receptacle 3 is mounted on the mounting frame part 29a via the mounting member 30C.

In the excavator 1E according to Embodiment 6, the filling receptacle 3 is mounted on the securing frame 29 such that the filling receptacle 3 is exposed to the exterior. Therefore, the filling receptacle 3 can be easily mounted on the slewing body 12E.

The excavator 1E according to Embodiment 6 produces substantially the same advantageous effects as those produced by the excavator 1C according to Embodiment 4.

### <Other Embodiments>

In the excavators 1C to 1E according to Embodiments 4 to 6, the filling receptacle 3 does not necessarily need to be mounted in the housing recess 26C and may be directly mounted on the frame parts 23Ca, 23Da, 29A. The lid members 27, 27A do not necessarily require the sealing members 28, 28A. For example, the lid member 27 may alternatively be configured to achieve a precision fit within the housing recess 26 when closed, to prevent the ingress of contaminants into the housing recess 26. The housing recesses 26, 26A to 26C do not necessarily need to be disposed on the left side in the slewing body 12, and may alternatively be disposed on the right side, the rear side, or the front side.

The excavators 1, 1A to 1E according to Embodiments 1 to 6 include hydraulic actuators, but may alternatively include electric actuators. In this case, electric power generated by the fuel cells is supplied to the electric actuators directly or via batteries. Furthermore, in the excavators 1, 1A to 1E according to Embodiments 1 to 6, the filling port 3a does not necessarily need to be disposed on the slewing bodies 12, 12A to 12E at a position higher than the lower surfaces of the slewing bodies 12, 12A to 12E and lower than the seating surface 22b of the driver seat 22a.

### <Exemplary Embodiments>

An excavator according to the first aspect includes: a slewing body rotatably mounted on a traveling device and including a cabin in which a driver seat is disposed; a hydrogen tank disposed within the slewing body; a fuel cell that generates electric power by consuming hydrogen in the hydrogen tank; and a filling receptacle mounted on the slewing body and leading to the hydrogen tank, the filling receptacle including a filling port at a distal end thereof. The filling port is disposed on the slewing body at a position higher than a lower surface of the slewing body and lower than a seating surface of the driver seat.

According to this aspect, the filling port of the filling receptacle is disposed at a position higher than the lower surface of the slewing body and lower than the seating surface of the driver seat. Therefore, the filling port can be positioned at a height above the ground. As a result, sand and dust from the ground can be kept from accumulating in the filling port. Furthermore, the seating surface is disposed at an accessible height that facilitates boarding and alighting. Since the filling port is disposed at a position higher than the lower surface of the slewing body and lower than the seating surface of the driver seat, accessibility to the filling port can be improved. This reduces the need for refueling personnel to assume extremely awkward postures or experience undue physical burden during the refueling process. Thus, the refueling operation can be facilitated. Accordingly, the efficiency of the refueling operation can be improved.

An excavator according to the second aspect is the excavator according to the first aspect in which the slewing body further includes a slewing frame rotatably mounted on the traveling device, and the filling port is disposed at a position higher than the slewing frame.

According to this aspect, the filling port is disposed at a position higher than the slewing frame. Therefore, the filling port can be disposed at an elevated position, for example, between the chest and shoulder height of refueling personnel. As a result, the refueling personnel can easily perform the hydrogen refueling operation while standing upright. Accordingly, the efficiency of the refueling operation can be improved.

An excavator according to the third aspect is the excavator according to the first or second aspect in which the filling receptacle is disposed such that an axis thereof extends diagonally downward.

According to this aspect, the filling receptacle is disposed such that the axis thereof extends diagonally downward. Even when the filling port is located at an elevated position, the dispenser nozzle can be inserted from below and thus, the efficiency of the refueling operation can be further improved. Furthermore, because the filling port is oriented downward, the accumulation of contaminants or moisture within the filling port can be reduced. Thus, the resistance of the filling receptacle to contaminants can be improved.

An excavator according to the fourth aspect is the excavator according to any one of the first to third aspects in which the slewing body further includes: a housing recess formed in a side surface of the slewing body and configured to house the filling receptacle; and a lid member that closes the housing recess, the lid member rotates about a rotation axis thereof to open and close the housing recess, and the rotation axis is positioned above the housing recess and extends in a cross direction crossing a height direction of the slewing body.

According to this aspect, the housing recess houses the filling receptacle. The lid member that closes the housing recess rotates about the rotation axis to open and close the housing recess. The rotation axis is positioned above the housing recess and extends in the cross direction crossing the height direction of the slewing body. Therefore, when the lid member is rotated, the lid member can be used as a canopy for the housing recess. Consequently, the lid member can reduce the ingress of contaminants or moisture into the housing recess. Thus, the resistance of the filling receptacle to contaminants can be improved.

An excavator according to the fifth aspect is the excavator according to any one of the first to fourth aspects in which the slewing body further includes: a housing recess that houses the filling receptacle; a lid member that opens and closes the housing recess; and a sealing member disposed on the lid member, and the sealing member abuts the filling port when the lid member is closed.

According to this aspect, the sealing member abuts the filling port when the lid member is closed. Therefore, it is possible to reduce the ingress of contaminants or moisture into the filling port when the lid member is closed. Thus, the resistance of the filling receptacle to contaminants can be improved.

An excavator according to the sixth aspect is the excavator according to any one of the first to fourth aspects in which the slewing body further includes: a housing recess that houses the filling receptacle; a lid member that opens and closes the housing recess; and a sealing member disposed on the lid member, and the sealing member abuts an outer peripheral edge of the housing recess when the lid member is closed.

According to this aspect, the sealing member abuts the outer peripheral edge of the housing recess when the lid member is closed. Therefore, it is possible to reduce the ingress of contaminants or moisture into the housing recess when the lid member is closed. Thus, the resistance of the filling receptacle to contaminants can be improved.

An excavator according to the seventh aspect is the excavator according to any one of the first to sixth aspects in which the slewing body includes: an outer cover that covers the hydrogen tank; and an outer frame that supports the outer cover, and the filling receptacle is mounted on the outer frame.

According to this aspect, the filling receptacle is mounted on the outer frame. Therefore, the filling receptacle can be easily mounted on the slewing body.

An excavator according to the eighth aspect is the excavator according to seventh aspect in which the outer frame includes a side frame part disposed outboard in a vehicle width direction within the slewing body, and the filling receptacle is mounted on the side frame part.

According to this aspect, the filling receptacle is mounted on the side frame part disposed outboard in the vehicle width direction within the slewing body. Thus, since the filling receptacle can be positioned on a lateral outer portion of the slewing body, accessibility to the filling receptacle can be improved.

An excavator according to the ninth aspect is the excavator according to the seventh or eighth aspect in which the outer frame includes a vertical frame part extending in a height direction of the slewing body, and the filling receptacle is mounted on the vertical frame part.

According to this aspect, the filling receptacle is mounted on the vertical frame part extending in the height direction. Therefore, regarding the mounting position of the filling receptacle, the design flexibility can be improved, and accessibility to the filling receptacle in the height direction can be improved.

An excavator according to the tenth aspect is the excavator according to any one of the seventh to ninth aspects in which the outer cover includes an access door, the outer frame includes at least one vertical frame part including a door edge frame part disposed in an area corresponding to a leading edge of the access door, and the filling receptacle is mounted on the door edge frame part.

According to this aspect, the filling receptacle is disposed on the door edge frame part. This allows for improved accessibility to the filling receptacle when the access door is open. Thus, the hydrogen refueling can be facilitated.

An excavator according to the eleventh aspect is the excavator according to any one of the seventh to ninth aspects in which the outer cover includes a double door including a first door and a second door, the outer frame includes at least one vertical frame part including a door edge frame part disposed in an area corresponding to leading edges of the first door and the second door, and the filling receptacle is mounted on the door edge frame part.

According to this aspect, the filling receptacle is disposed on the door edge frame part which is located at the door edges of the doors of the double door. This allows for improved accessibility to the filling receptacle when the access door is open. Thus, the hydrogen refueling can be facilitated.

An excavator according to the twelfth aspect is the excavator according to the first aspect in which the slewing body includes: an outer cover that covers the hydrogen tank; and a securing frame that secures the hydrogen tank, the outer cover includes an access door, and the filling receptacle is mounted on the securing frame such that when the access door is open, the filling receptacle is exposed to an exterior.

According to this aspect, the filling receptacle is mounted on the securing frame such that the filling receptacle is exposed to the exterior. Therefore, the filling receptacle can be easily mounted on the slewing body.

An excavator according to the thirteenth aspect includes: a slewing body rotatably mounted on a traveling device; a hydrogen tank disposed within the slewing body; a fuel cell that generates electric power by consuming hydrogen in the hydrogen tank; and a filling receptacle mounted on the slewing body and leading to the hydrogen tank. The slewing body includes: an outer cover that covers the hydrogen tank; and an outer frame that supports the outer cover. The filling receptacle is mounted on the outer frame.

According to this aspect, the filling receptacle is mounted on the outer frame. Therefore, the filling receptacle can be easily accessed. Accordingly, the efficiency of the refueling operation can be improved. Furthermore, the structure in which the filling receptacle is mounted on the outer frame allows the filling receptacle to be easily mounted on the slewing body.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

## Claims

1. An excavator comprising:
a slewing body rotatably mounted on a traveling device and including a cabin in which a driver seat is disposed;
a hydrogen tank disposed within the slewing body;
a fuel cell that generates electric power by consuming hydrogen in the hydrogen tank; and
a filling receptacle mounted on the slewing body and leading to the hydrogen tank, the filling receptacle including a filling port at a distal end thereof, wherein
the filling port is disposed on the slewing body at a position higher than a lower surface of the slewing body and lower than a seating surface of the driver seat.

2. The excavator according to claim 1, wherein
the slewing body further includes a slewing frame rotatably mounted on the traveling device, and
the filling port is disposed at a position higher than the slewing frame.

3. The excavator according to claim 1, wherein
the filling receptacle is disposed such that an axis thereof extends diagonally downward.

4. The excavator according to claim 1, wherein
the slewing body further includes: a housing recess formed in a side surface of the slewing body and configured to house the filling receptacle; and a lid member that closes the housing recess,
the lid member rotates about a rotation axis thereof to open and close the housing recess, and
the rotation axis is positioned above the housing recess and extends in a cross direction crossing a height direction of the slewing body.

5. The excavator according to claim 1, wherein
the slewing body further includes: a housing recess that houses the filling receptacle; a lid member that opens and closes the housing recess; and a sealing member disposed on the lid member, and
the sealing member abuts the filling port when the lid member is closed.

6. The excavator according to claim 1, wherein
the slewing body further includes: a housing recess that houses the filling receptacle; a lid member that opens and closes the housing recess; and a sealing member disposed on the lid member, and
the sealing member abuts an outer peripheral edge of the housing recess when the lid member is closed.

7. The excavator according to claim 1, wherein
the slewing body includes: an outer cover that covers the hydrogen tank; and an outer frame that supports the outer cover, and
the filling receptacle is mounted on the outer frame.

8. The excavator according to claim 7, wherein
the outer frame includes a side frame part disposed outboard in a vehicle width direction within the slewing body, and
the filling receptacle is mounted on the side frame part.

9. The excavator according to claim 7, wherein
the outer frame includes a vertical frame part extending in a height direction of the slewing body, and
the filling receptacle is mounted on the vertical frame part.

10. The excavator according to claim 7, wherein
the outer cover includes an access door,
the outer frame includes at least one vertical frame part including a door edge frame part disposed in an area corresponding to a leading edge of the access door, and
the filling receptacle is mounted on the door edge frame part.

11. The excavator according to claim 7, wherein
the outer cover includes a double door including a first door and a second door,
the outer frame includes at least one vertical frame part including a door edge frame part disposed in an area corresponding to leading edges of the first door and the second door, and
the filling receptacle is mounted on the door edge frame part.

12. The excavator according to claim 1, wherein
the slewing body includes: an outer cover that covers the hydrogen tank; and a securing frame that secures the hydrogen tank,
the outer cover includes an access door, and
the filling receptacle is mounted on the securing frame such that when the access door is open, the filling receptacle is exposed to an exterior.

13. An excavator comprising:
a slewing body rotatably mounted on a traveling device;
a hydrogen tank disposed within the slewing body;
a fuel cell that generates electric power by consuming hydrogen in the hydrogen tank; and
a filling receptacle mounted on the slewing body and leading to the hydrogen tank, wherein
the slewing body includes: an outer cover that covers the hydrogen tank; and an outer frame that supports the outer cover, and
the filling receptacle is mounted on the outer frame.
